# EUROPEAN PATENT SPECIFICATION

(11) **EP 3 070 800 B1**
(45) Date of publication and mention of the grant of the patent: **01.09.2021**
(21) Application number: 16161431.8
(22) Date of filing: 21.03.2016
(51) Int. Cl.: H02J 3/00, H01H 9/02, H02G 3/02

(54) **ELECTRICAL SYSTEM FOR INSTALLATION IN A BUILDING**
ELEKTRISCHES SYSTEM ZUR INSTALLATION IN EIN GEBÄUDE
SYSTÈME ÉLECTRIQUE POUR UNE INSTALLATION DANS UN BÂTIMENT

(30) Priority: 20.03.2015 BE 201505166
(43) Date of publication of application: 21.09.2016
(73) Proprietor: Niko NV, 9100 Sint-Niklaas (BE)
(72) Inventor: De Nil, Dimitri, 2845 Niel (BE); Van Haver, Karel Jan Christiane, 9940 Evergem (BE)
(74) Representative: D'Halleweyn, Nele Veerle Trees Gertrudis

(56) References cited:
- US-A1- 2008 093 100
- US-A1- 2014 001 846
- US-A1- 2014 049 107
- US-B1- 8 581 439
- Christoph Klima: "Lichtsteuerung: Kreuzschaltungen per Funk mit HomeMatic und FHEM realisieren", Meintechblog.de , 7 January 2014 (2014-01-07), XP002760433, Retrieved from the Internet: URL:http://www.meintechblog.de/2014/01/lic htsteuerung-kreuzschaltungen-per-funk-mit- homematic-und-fhem-realisieren/ [retrieved on 2016-07-28]
- "Adding 2nd Light Switch To Control A Light (Virtual 3 Way)", AARTech Canada , 23 May 2014 (2014-05-23), XP002760434, Retrieved from the Internet: URL:https://www.aartech.ca/blog/virtual-3- way-remote-switch/ [retrieved on 2016-08-01]
- "Raumautomation", German Wikipedia , 14 March 2015 (2015-03-14), XP002744288, Retrieved from the Internet: URL:https://de.wikipedia.org/w/index.php?t itle=Raumautomation&oldid=139776806 [retrieved on 2015-09-09]
- "Ideenbuch 2008/2009", CONRAD ELECTRONIC KATALOG, vol. 2008/2009, 1 July 2008 (2008-07-01), pages 580-599, XP002744289, Hirschau
- None

## Description

### Field of Invention

The field of the invention relates to an electrical system for installation in a building for controlling electrical loads such as lights, fans, heating, blinds, etc., and to an electrical device for use in such a system. The invention relates in particular to a method according to the preamble of claim 1.

### Background

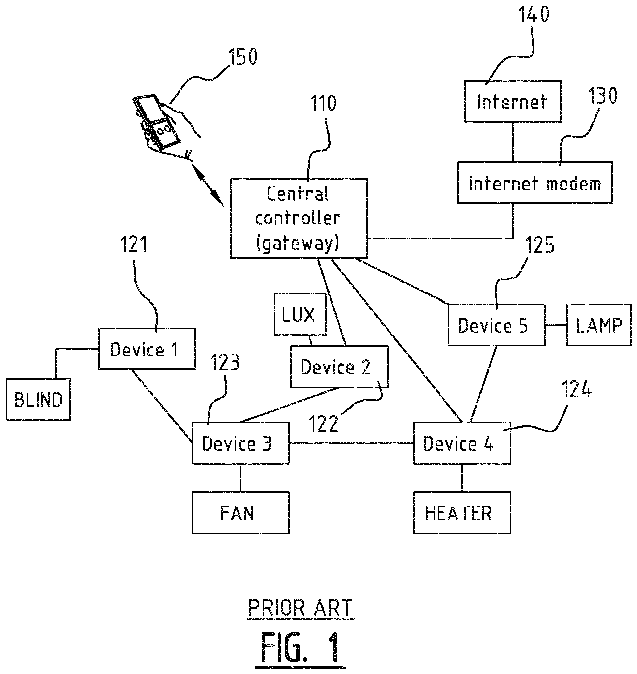

Today most home automation networks make use of a central controller that is needed to build the network. Such an embodiment is illustrated in figure 1. A central controller 110 builds a network for connecting a plurality of electrical devices 121-125 in a building, e.g. a blind or curtain actuator 121; a twilight switch with photo cell 122, a fan actuator 123, a thermostat 124, a light switch 125 or a dimmer 125, etc. The central controller 110 is connected through a modem 130 to the Internet 140. Typically the central controller 110 has no other functionality than creating and managing the network, and contains all automation intelligence. In some existing prior art systems, when different networks, e.g. a light control network and a heating control network, are installed within the same building, this requires multiple central controllers.

An example of a system with a central controller is the Niko Home Control system where the central controller is the nerve center of the installation and controls the electrical control devices in the building via modules in the electrical cabinet implementing e.g. monitoring of energy consumption, dimming of lights, control of ventilation, operation of roll-down shutters, curtains or sun blinds. The modules are connected to a bus which is in turn connected to the electrical control devices. Programming occurs via the programming software which is uploaded onto the controller.

Another example of a commercially available light automation system is the Philips Hue system where RGB light bulbs are used in combination with a central controller included in a central box containing the intelligence to control the operation of the light bulbs.

Yet another example is the smart energy box solution of Electrabel, where a plurality of smart energy plugs measures the energy consumption of electrical appliances in the building and can switch the electric appliances on and off automatically through the use of a gateway (central controller) as a communication interface between the smart energy plugs and a web platform.

The cost of such a central controller is often only acceptable for larger installations, and installing such a controller somewhere in the building creates an additional constraint. Further, when a bus is required, retrofitting of existing homes is a laborious task requiring drilling, channelling, plastering, etc.

The document Christoph Klima, "Lichtsteuerung: Kreuzschaltungen per Funk mit HomeMatic und FHEM realisieren", Meintechblog.de, 7 January 2014 (2014-01-07), retrieved from the Internet: http://www.meintechblog.de/2014/01/lichtsteuerungkreuzschaltungen-per-funk-mit-homematic-und-fhem-realisieren/ on 2016-07-28, discloses how a configuration with a two-pole cross switching function and with a SPCO switching function can be replaced using HomeMatic switching devices.

### Summary

The object of the invention is to provide an improved method for retrofitting of existing homes with smart devices.

The method of the invention has the features of claim 1. Preferred embodiments thereof are defined in the dependent claims.

The present invention provides a method for replacing an existing switch or dimmer in an existing circuit with a smart device. The existing circuit comprises said existing switch or dimmer and an other switch connected via existing wiring in an existing two-way switching circuit. The method comprises the following steps. In a first step the existing switch or dimmer is removed from a wall box where cables for connecting to a lamp are located. The method further comprises placing the smart device in said wall box; replacing the other existing switch with a new switch which is capable of providing the smart device with a signal when said new switch is being operated by a user; and changing the wiring diagram using the existing wiring.

According to the invention the smart device comprises: a base comprising an electrical part configured for being at least partially built-in in a wall of the building and configured for being directly connected, in a wall, to electrical wires present in the wall of the building; a communication part on said base; a microcontroller on said base connected to the communication part and to said electrical part, said microcontroller being configured for processing data received by the communication part and for configuring or operating the electrical part accordingly; and for sending data via said communication part. The smart device may be a smart dimmer wherein the electrical part has a controllable dimming function; or the smart device may be a smart switch wherein the electrical part has a controllable switching function.

According to the invention, the step of replacing the other existing switch comprises adding a new wired switch and the step of changing the wiring diagram comprises connecting the communication part via the existing wiring to the new wired switch. In an alternative solution according to the invention the step of replacing the other existing switch comprises adding a new switch configured to communicate wirelessly in a direct manner with the communication part of the smart device; and the step of changing the wiring comprises connecting a short where the other existing switch has been removed. Another object of the present invention is to provide an electrical system for installation in a building, which can be used for retrofitting existing buildings as well as in new buildings, which is more robust, and which allows for a gradual retrofitting of existing buildings in an improved manner.

To that end, there is provided an electrical system comprising a plurality of electrical devices. Each electrical device is suitable for placement in a fixed location in the building, and is configured for facilitating or controlling the provision of power to a load in the building, and/or for measuring the power provided to the load. The plurality of electrical devices comprises a first electrical device and a second electrical device. At least the first electrical device comprises a base, a communication part on said base and a microcontroller on said base. The base comprises an electrical function configured for being at least partially built-in in a wall of the building and configured for being directly connected, in the wall, to electrical wires present in a wall of the building. The communication part is configured to communicate wirelessly with a mobile device in a direct manner. The microcontroller is connected to the communication part and to the electrical function. The microcontroller is configured for processing data received by the communication part and for configuring or operating the electrical function accordingly, and for wirelessly sending data via the communication part to the mobile device. The second electrical device comprises a base comprising an electrical function and a communication part. The communication part of the first electrical device is configured to communicate wirelessly with the communication part of the second electrical device, such that a network comprising the first and the second electrical device can be built.

By providing a communication part for wireless communication and a microcontroller directly in the electrical device which is built-in in an opening in a wall, the electrical device can be controlled and configured directly through the use of a mobile device, i.e. the electrical device can be both controlled and programmed through the use of a mobile device, without the need for a central controller and/or a bus. In that way retrofitting without drilling or channeling becomes possible, and an existing electrical device can be simply replaced with a first electrical device in accordance with the invention.

In the context of the present invention, the term wall may refer to a side wall, a ceiling or a floor.

In the context of the present invention, the term "electrical device" refers to a device suitable for placement in a fixed location in the building and configured for facilitating or controlling the provision of power to a load in the building, or for measuring the power provided to the load. In the context of the present invention, an electrical device may be e.g. any one of the following: a switch, in particular a light switch; a socket; a dimmer; a fan actuator; a blind or curtain actuator, a thermostat, an RGB controller, an RGBW controller, a plug which is insertable in a socket.

The term "first electrical device" refers to an electrical device that is intended and configured for being mounted at least partially in an opening in the wall where the electrical device is connected to electrical wires present in the wall. Typically, the electrical wires in the wall comprise wires connected to the mains, and optionally wires for connecting the electrical device with a load such as a light, a fan engine, etc. However, in other embodiments the electrical wires in the wall may comprise wires connected to a DC power source. More generally the wires in the wall may be connected to any AC or DC power source.

The term "second electrical device" may refer to an electrical device that is intended for being at least partially build-in in a wall, to an electrical device that is not intended for being built-in, to an electrical device that can be simply mounted against a surface, to a device than can be attached to another electrical device, such as a plug that is insertable in a socket, to a device which is not connected to electrical wires in the wall and which comprises a battery, and more generally to any electrical device as defined above.

The term "mobile device" may refer to any mobile device such as a smart phone, a smart watch, a tablet, a mobile computer, a proprietary remote control device, etc.

Compared to the Philips Hue system described above, the system of the present invention has the advantage that it can be seamlessly integrated in existing electrical installations without the need for an additional separate controller. Also, in the Philips Hue System, when a light switch in the building disconnects a lamp associated with the Philips Hue System, from the mains, the controller of the Philips Hue System cannot turn on the light. By providing, in accordance with the invention, the controller in an electrical device in which the microcontroller is connected to the electrical function, e.g. a switching function, the microcontroller can directly operate the electrical function, ensuring a seamless integration.

In a preferred embodiment, the second electrical device comprises a base, the communication part on said base, and a microcontroller on said base. The base comprises an electrical function. Optionally the base is configured for being at least partially built-in in a wall of the building and for being directly connected, in the wall, to electrical wires present in a wall of the building. The microcontroller is connected to the communication part and to the electrical function, and the microcontroller is configured for processing data received by the communication part and for configuring or operating the electrical function accordingly. The communication part of the first electrical device is configured to communicate wirelessly with the communication part of the second electrical device and vice versa. In that way, the first electrical device can communicate wirelessly with the second electrical device and hence can also control and configure the second electrical device. In such a configuration where the first electrical device together with one or more second smart electrical devices forms a network, there will typically be a master device, e.g. the first electrical device, and one or more slave devices, e.g. the one or more second electrical devices. There may be one master device in a building, but there may also be a plurality of master devices in the building, e.g. one for each room of a building, or one for each floor or area of a building. Preferably, the first and second electrical devices are configured in a similar manner such that when one master device fails, the master function can be taken over by a second electrical device. The first and second electrical devices are preferably configured such that there is automatically chosen a master device amongst said first and second electrical devices. However, it is also possible that an electrical device is configured for being manually chosen as a master device amongst the first and second electrical devices such that an operator can manually select a master device, e.g. with a suitable app on the mobile device.

In an exemplary embodiment, the communication part of the first electrical device comprises a first communication module configured to operate in a spectrum range above 1,5 GHz; said first communication module being configured to communicate with the mobile device. This first communication module may be e.g. a Bluetooth low energy module configured to operate according to the Bluetooth low energy protocol, also called Bluetooth smart protocol, e.g. as specified in Bluetooth Core Specification version 4.0, 4.1, 4.2, or in any other future Bluetooth specification. In that way, the first communication module will be able to communicate with a mobile device that is provided with a compatible communication module. The spectrum range above 1.5 GHz, e.g. the 2.4 GHz band as in Bluetooth low energy, allows for more channels and a small antenna. Preferably, the communication part of the first electrical device comprises a second communication module configured to operate in a spectrum range below 1.5 GHz, more preferably below 1 GHz, and configured to communicate with the communication part of the second electrical device. By having on the one hand, a first communication module that is configured to communicate with a mobile device in a first frequency range, and on the other hand, a second communication module that operates in a second frequency range different from the first frequency range, the second communication module can be configured to work well for the communication with other electrical devices in the building. The second communication module can operate for instance between 800 and 900 MHz. Those lower frequencies have a better penetration through concrete and steel compared with the 2.4 GHz range used by the Bluetooth protocol, and provide a longer range for a given output power.

In another exemplary embodiment of the invention the communication part comprises a single communication module configured to communicate with the mobile device and the second electrical device using the same wireless technology, e.g. Wi-Fi.

In an exemplary embodiment, the electrical function comprises a controllable switch, and the microcontroller is configured to operate the controllable switch based on data received through the communication part.

In an exemplary embodiment, the first and/or second electrical device further comprises a measurement means configured for measuring a measure representative for the power consumed by a load connected to the electrical function, and the measurement means is connected to the microcontroller and the microcontroller is configured to communicate said measure via the communication part. Prior art solutions typically consist of a separate measurement means which is not configured to be built-in together with an electrical function in a wall. Examples of such prior art devices are: a measurement module mounted in an electrical cabinet, or a smart meter plug which can be inserted in a socket, as an intermediate device between the socket and an electrical appliance. An electrical device with measurement means according to exemplary embodiments of the invention has the advantage that existing electrical devices can be simply replaced with smart electrical devices with integrated measurement means and the need for a separate controller is avoided since the microcontroller of the electrical device can fulfill this role.

According to an exemplary embodiment, the first and/or second electrical device is a socket and comprises a socket outlet comprising the base and a central plate fixable to or fixed to said base, and a cover plate configured to be attached to said base after mounting said socket outlet in the wall.

According to another exemplary embodiment, the first and/or second electrical device is a dimmer and comprises the base with the electrical function in the form of a dimming function. The dimmer further comprises a button configured to be mounted on the base and to control the dimming function, and a cover plate configured to be attached to said base after mounting said base in the wall.

According to an exemplary embodiment, the first and/or second electrical device comprises a switch for controlling a load such as a light point. The base is provided with the electrical function including a switching function. The switch further comprises a button configured to be mounted on the base and to control the switching function, and a cover plate configured to be attached to said base after mounting said base in the wall.

In yet another exemplary embodiment the first and/or second electrical device may be a thermostat for controlling a heater. The thermostat comprises a temperature sensor and a controller (optionally integrated in the microcontroller) for controlling the heater in function of the sensed temperature. The base may be provided with an input means such as a touch screen, e.g. for inputting a desired temperature. Also there may be provided a cover plate configured to be attached to the base after mounting the base in the wall.

In yet another exemplary embodiment the first and/or second electrical device may be an RGB or RGBW LED controller, i.e. a controller for controlling the provision of power to red, green and blue (and optionally also white) light emitting diodes.

In yet another exemplary embodiment the first and/or second electrical device may be an electrical device with a sensor.

According to an aspect the electrical device corresponds with the first electrical device described above and comprises: a base comprising an electrical function configured for being at least partially built-in in a wall of the building and configured for being directly connected, in the wall, to electrical wires present in a wall of the building; a communication part on said base, said communication part being configured to communicate wirelessly with a mobile device in a direct manner and being configured to communicate with another electrical device in a direct manner; a microcontroller on said base connected to the communication part and to said electrical function, said microcontroller being configured for processing data received by the communication part and for configuring or operating the electrical function accordingly; and for wirelessly sending data via said communication part to the mobile device. The communication part of the electrical device may comprise a first communication module configured to operate in a spectrum range above 1.5 GHz and configured to communicate with the mobile device; and a second communication module configured to operate in a spectrum range below 1.5 GHz, and configured to communicate with the communication part of another electrical device.

Such an electrical device may have any of the features described above in connection with the first electrical device.

Further the electrical device may comprise power converter circuitry configured to convert power from a power source, typically the mains, to a suitable level for feeding at least the microcontroller and the communication part; and a data storage connected to the microcontroller, said data storage storing configuration data used by the microcontroller to operate the electrical function.

In a preferred embodiment the electrical device comprises a time knowledge module comprising a real time clock and configured to provide the microcontroller with time data.

According to a second aspect of the invention the electrical device comprises: a base comprising an electrical function; a communication part on said base, said communication part being configured to communicate wirelessly with a mobile device in a direct manner and being configured to communicate with another electrical device in a direct manner; a microcontroller on said base connected to the communication part and to said electrical function, said microcontroller being configured for processing data received by the communication part and for configuring or operating the electrical function accordingly; and for wirelessly sending data via said communication part to the mobile device. The communication part comprises: a first communication module configured to operate in a spectrum range above 1.5 GHz, and configured to communicate with the mobile device; and a second communication module configured to operate in a spectrum range below 1.5 GHz, preferably below 1 GHz, and configured to communicate with the communication part of another electrical device. Such an electrical device may have any of the features described above in connection with the first or the second electrical device, and does not need to be a build-in device.

According to another aspect, there is provided a computer program in machine-readable and machine-executable form to perform one or more steps for configuring an electrical device of the invention. Such a computer program is typically an app which runs on the mobile device and which is configured to obtain input data from a user and to communicate configuration data based on the input data to the electrical device.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically an electrical system of the prior art for use in a building;
Figure 2 illustrates schematically an electrical system according to an exemplary embodiment of the invention for use in a building;
Figure 3 illustrates a block diagram of a first electrical device communicating with a second electrical device and with a mobile device, in accordance with an exemplary embodiment of the invention;
Figure 4 illustrates a first use case of an exemplary embodiment of the invention;
Figure 5 illustrates a second use case of an exemplary embodiment of the invention;
Figure 6 illustrates a schematic perspective view of a dissembled electrical device in accordance with an exemplary embodiment of the invention;
Figures 7A, 7B and 7C illustrate circuit diagrams for an existing configuration of a two-way switching circuit, a first embodiment of a retrofit configuration thereof in accordance with the invention, and a second embodiment of a retrofit configuration thereof in accordance with the invention, respectively; and
Figures 8A, 8B and 8C illustrate circuit diagrams for an existing configuration of a two-way switching circuit with intermediate switch, a first embodiment of a retrofit configuration thereof in accordance with the invention, and a second embodiment of a retrofit configuration thereof in accordance with the invention, respectively.

### Description of embodiments

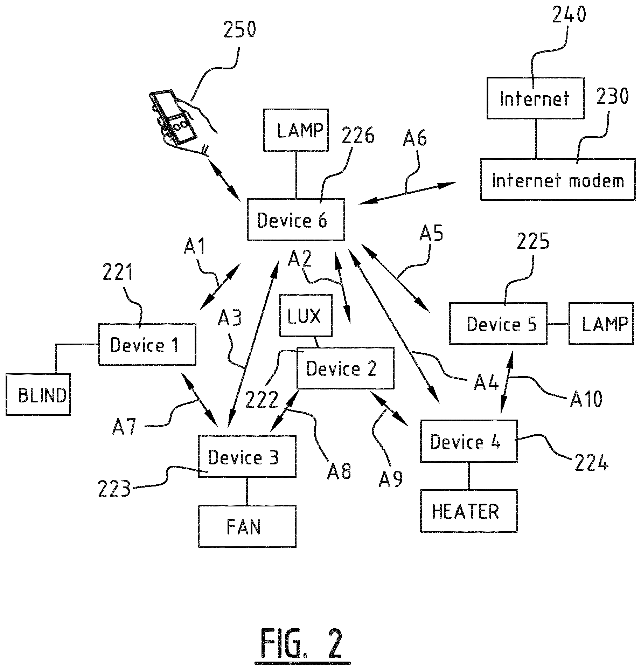

Figure 2 illustrates an exemplary embodiment of an electrical system of the invention comprising a plurality of electrical devices 221-226. In the example, electrical device 226 is a smart first electrical device as defined in claim 1, here a smart switch or a smart dimmer 226. In the example of figure 2, this electrical device 226 functions as a master device which builds a network for connecting the plurality of electrical devices, e.g. a blind or curtain actuator 221; a twilight switch with photo cell 222, a fan actuator 223, a thermostat 224, a light switch optionally including a dimmer 225, etc. The electrical device 226 may be configured to communicate wirelessly with a modem 230 which is connected to the Internet 240. Alternatively the electrical device 226 may communicate with a mobile device 250, and the mobile device 250 may then communicate with the modem 230 or with another device (not shown) connected to the Internet 240.

The electrical device 226 is connected to electrical wires present in a wall of the building, and corresponds to a first electrical device as defined above. The other electrical devices 221-225 may or may not be built-in electrical devices, and correspond to second electrical devices as defined above. The electrical device 226 comprises a base, a communication part on said base and a microcontroller on said base.

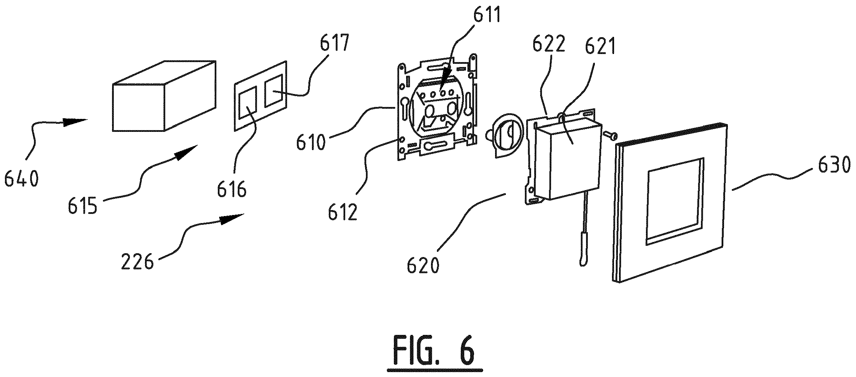

An example of an electrical device 226 is illustrated in figure 6. The electrical device comprises a base 610, a central plate 620 and a cover part 630. In alternative embodiments the cover plate 630 may be omitted. Central plate 620 is provided with a switch plate 621 which is mounted on a frame 622. Frame 622 can be mounted against base 610. Base 610 is provided with an electrical built-in functionality, here a switching function 611, and is intended to be built into the wall, wherein a frame 612, typically a metal frame, of base 610 is fixed against the wall. Advantageously provided on the rear side of cover part 630 are means which allow cover part 630 to be snapped fixedly onto frame 612. In order to install the electrical device, base 610 will typically first be fixed in an opening in the wall, after which central plate 620 is mounted against base 610. Cover frame 630 is then snapped fixedly onto base 610. The switching function 611 is configured for being directly connected, in the wall, to electrical wires present in a wall of the building. The base 610 is further provided with a communication part 616 and a microcontroller 617. The communication part 616 and the microcontroller 617 may be provided on a PCB 615 which is fixed to the base 610 and optionally covered by a cover 640. The communication part 616 is configured to communicate wirelessly with a mobile device 250 in a direct manner, i.e. without a separate intermediate controller. The microcontroller 617 is connected to the communication part 616 and to the electrical switching function 611. The microcontroller 617 is configured for processing data received by the communication part 616 and for configuring or operating the electrical function 611 accordingly, and for wirelessly sending data via the communication part 616 to the mobile device 250. In that way, the electrical device 226 can be controlled directly through to the use of a mobile device 250 without the need for a central controller and/or a bus. Existing electrical devices in a building may be replaced with "smart" first electrical devices without the need for drilling and/or channeling, wherein the existing electrical wires in the wall may be reused for connecting a smart electrical device.

In the example above the first electrical device comprises a switching function 611, but the skilled person understands that a similar architecture may be used when the electrical function is a dimming function, fan/blind actuator function, an RGB(W) controller function, or more generally any electrical function.

The second electrical devices 221-225 may be existing electrical devices or "smart" electrical devices. The second electrical device 221-225 may also comprise a base, a communication part on said base, and a microcontroller on said base, e.g. as in the exemplary embodiment of figure 6, but may also be a non-built-in device. The microcontroller is connected to the communication part and to the electrical function, and the microcontroller is configured for processing data received by the communication part and for configuring or operating the electrical function accordingly. The communication part of the first electrical device 226 is configured to communicate wirelessly with the communication part of each second electrical device 221-225 and vice versa, see arrows A1-A5. If a second electrical device of the second devices 221-225 is not within the reach of the first electrical device 226, the first electrical device 226 may communicate with another intermediate second device, which other intermediate second device then communicates with the second electrical device to be reached, see also the arrows A7, A8, A9 and A10. In that way, the first electrical device 226 can communicate wirelessly with the second electrical devices 221-225, and hence can also control the second electrical devices 221-225. In such a configuration with one or more second smart electrical devices 221-225, there will typically be one master device, here the first electrical device 226, and one or more slave devices, here the one or more second electrical devices 221-225. Preferably, the first and second electrical devices 221-226 are configured in a similar manner such that when one master device fails, the master function can be taken over by another device, resulting in a very robust electrical system. Also the first and second electrical devices 221-226 are preferably configured such that there is automatically chosen a master device amongst said first and second electrical devices 221-226.

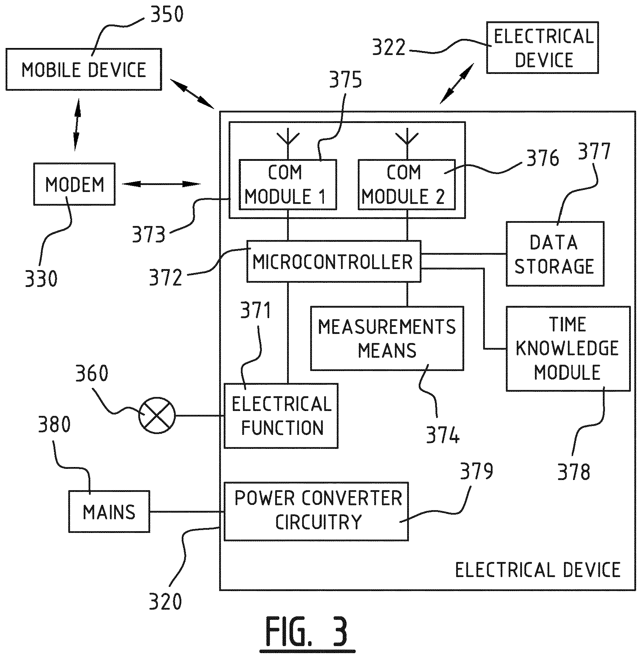

Figure 3 illustrates an exemplary embodiment of an electrical device 320 of the invention. The electrical device 320 comprises an electrical function 371, e.g. a switching function or a dimming function, a microcontroller 372, and a communication part 373. The microcontroller 372 may consist of one control unit or of a plurality of control units. The communication part 373 comprises a first communication module 375 configured to operate in a spectrum range above 1,5 GHz. The first communication module 375 is configured to communicate with a mobile device 350. This first communication module 375 may be e.g. a Bluetooth low energy module configured to operate according to the Bluetooth low energy protocol, also called Bluetooth smart protocol, e.g. as specified in Bluetooth Core Specification version 4.0, 4.1 or 4.2. A spectrum range in the 2.4 GHz band as in Bluetooth low energy, allows for more channels and a small antenna. The communication part 373 comprises a second communication module 376 configured to operate in a spectrum range below 1.5 GHz and configured to communicate with the communication part of a second electrical device 322. By having on the one hand, a first communication module 375 that is configured to communicate with a mobile device 350 in a first frequency range, and on the other hand, a second communication module 376 that operates in a second lower frequency range, the second communication module 376 can be configured to work well for the communication with other electrical devices 322 in the building. The second communication module 376 can for instance operate between 800 and 900 MHz. This lower frequency range has a better penetration through concrete and steel compared with the 2.4 GHz range used by the Bluetooth protocol, and has a longer range for a given output power.

The electrical device 320 comprises power converter circuitry 379 configured to convert power from the mains (or from another power source) to a suitable level for feeding the different components of the electrical device 320, such as the microcontroller 372, the first and second communication modules 373, 376, the time knowledge module 378, and any other module that needs to be fed.

The electrical device 320 comprises a data storage 377 connected to the microcontroller 372. The data storage 377 stores configuration data used by the microcontroller 372 to operate the electrical function 371, in this example a switch or a dimmer which controls a lamp 360. This configuration data may be communicated to the electrical device 320 by the mobile device 350 or by another electrical device 322.

The electrical device 320 may also comprise a time knowledge module 378 comprising a real time clock and configured to provide the microcontroller 372 with time data. In that way, when the operation of the electrical function 371, e.g. a switching function or a dimming function, is time dependent, the microcontroller 372 may receive time data from the time knowledge module 378 in combination with the afore mentioned configuration data to control the electrical function 371.

Optionally, the electrical device 320 further comprises a measurement means, e.g. a measurement IC 374 configured for measuring a measure representative for the power consumed by the load 360 connected to the electrical function 371. The measurement means 374 is connected to the microcontroller 372 and the microcontroller 372 is configured to communicate said measure via the communication part 373, either directly to a mobile device 350 or directly to a modem 330 in the building, and from there to an operator server. If it is communicated directly to the mobile device 350, the mobile device 350 may communicate the measured data to an operator server, optionally through the modem 330 using e.g. a Wi-Fi communication.

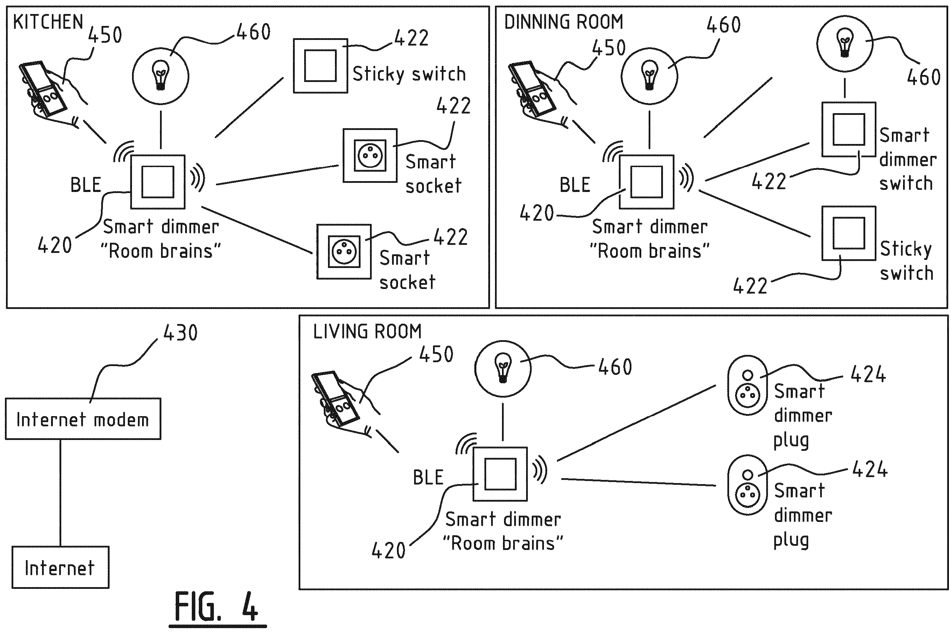

Figure 4 illustrates a first use case in which an embodiment of the invention is used. In the embodiment of figure 4, there is shown a building with a kitchen, a dining room and a living room. Each room is provided with a smart dimmer 420 which controls a dimmable light 460. The smart dimmer 420 may implemented as described in figure 3 and may function as the first electrical device 226 of figure 2. These smart dimmers 420 are the master devices, i.e. there is one master device per room. For completeness it is noted that this is merely an exemplary embodiment, and that there may be provided only one master device for the entire building or one master device per floor or area of a building, or more than one master device per room. These dimmers 420 each communicate with a number of electrical devices 422, 424. Some of those electrical devices 422 may also be smart electrical devices in the sense that they are also provided with a microcontroller and a communication part and that they can take over the master function if needed. The electrical device 422 may be a smart socket comprising a socket outlet, and a cover plate configured to be attached to the socket outlet after mounting said socket outlet in the wall. The socket outlet comprises the base and a central plate fixable to or fixed to said base, and the socket outlet comprises the microcontroller and the communication part. The electrical device 422 may also be a smart switch for controlling a load 460 such as a light point, a fan, etc, or may be a non-smart switch such as a push-button or a sticky switch. The switch typically comprises a base with the switching function, a button configured to be mounted on the base and configured to control the switching function, and a cover plate configured to be attached to the base after mounting the base in the wall.

The smart dimmers 420 may also communicate with smart plugs 424, i.e. with non-built-in devices. Such a smart plug 424 is an electrical device configured to be plugged into a socket and to receive a plug from an electrical appliance. The smart plug 424 is further configured to measure the power provided to the electrical appliance. Such a smart plug 424 may comprise a microcontroller and a communication module similar to those of the first device, such that it may also function as a master device for the network of electrical devices. Alternatively, the smart plug 424 may be configured for sending power measurement data via a communication part thereof, without having additional intelligence for performing a master function.

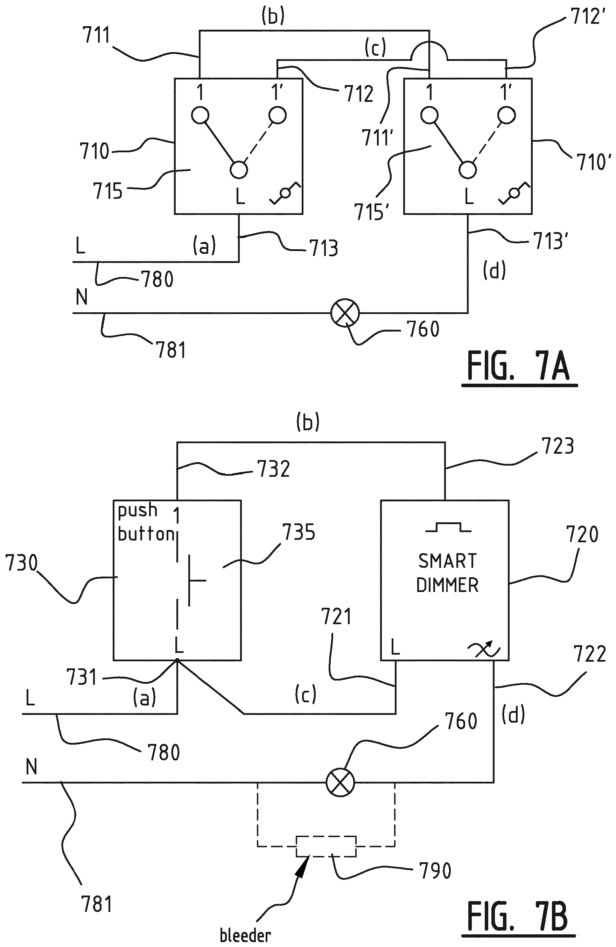

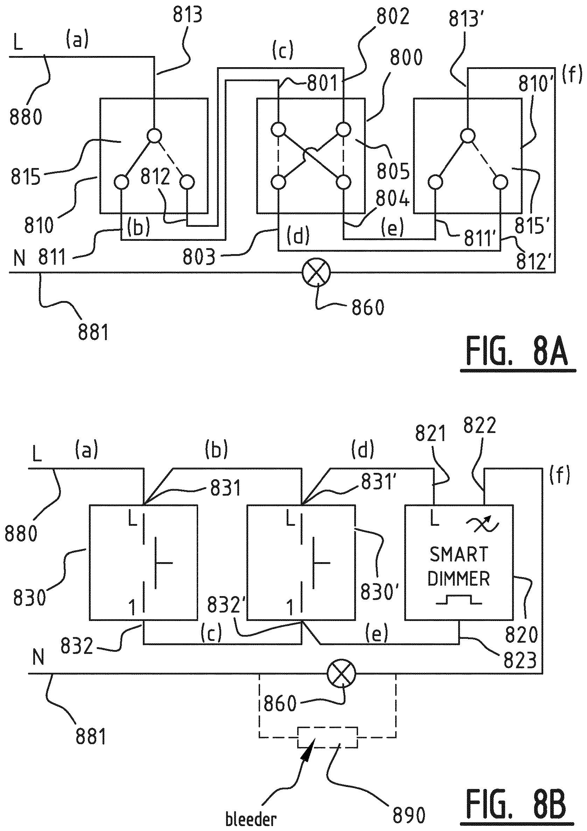

When replacing an existing switch or dimmer with a smart dimmer, the smart dimmer is placed in a wall box where the cables to the lamp are located. If there are other switches in the same circuit, those switches may be replaced with simple switches capable of providing the smart switch with a signal when the simple switch is being operated by a user. Examples of such a simple switch are: a simple push buttons capable of providing a power pulse to the smart dimmer when the push button is being pushed by a user; a so-called wireless "sticky" switch which is not connected to the mains, comprises a battery, and is configured to send a wireless signal to the smart dimmer when the sticky switch is being operated by a user. The wiring diagram needs to be changed but the existing wiring may be used. This is illustrated in figures 7A-7C and 8A-8C.

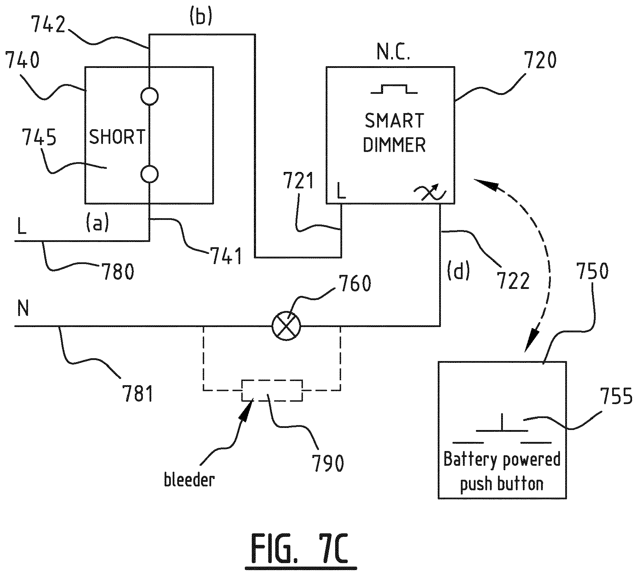

Figures 7A, 7B and 7C illustrate circuit diagrams for an existing configuration of a two-way switching circuit for controlling a lamp 760, a first embodiment of a retrofit configuration thereof in accordance with the invention, and a second embodiment of a retrofit configuration thereof in accordance with the invention, respectively. The two-way switching circuit of figure 7A comprises a first switch 710 with a single pole changeover (SPCO) switching function 715 and a second switch 710' with a SPCO switching function 715'. The first switch 710 has a common terminal 713 connected to a single phase line L of the mains, and a first and second terminal 711 and 712 connected to corresponding first and second terminals 711', 712' of the second switch 710', respectively. The common terminal 713' of the second switch 710' is connected to a first terminal of the lamp 760, and the other terminal of the lamp 760 is connected to the neutral N of the mains 780, 781.

According to a first embodiment the two-way switching circuit of figure 7A may be replaced with a retrofit configuration comprising a smart dimmer 720 and a push button 730 having an electrical push button switching function 735. The smart dimmer 720 may be built in accordance with the exemplary embodiment of figure 3 and/or in accordance with the exemplary embodiment of figure 6 and/or in accordance with any other embodiment of a smart dimmer disclosed above. The push button 730 has a first terminal 731 connected to a single phase line L of the mains 780, 781, and second terminal 732 connected to a third terminal 723 of the smart dimmer 720 for providing a voltage pulse to the smart dimmer 720 when the push button 730 is operated. The smart dimmer 720 has a first terminal 721 connected to the first terminal 731 of the push button 730, and a second terminal 722 connected to a first terminal of the lamp 760. The other terminal of the lamp 760 is connected to the neutral N of the mains 780, 781. Optionally there may be provided a bleeder circuit 790 in parallel with the lamp 760. When the push button 730 is operated by a user, there is provided a pulse signal on terminal 723, indicating to the smart dimmer that the lamp has to be switched on/off. It is clear from figure 7B and figure 7A, that the existing two-way switching circuit may be replaced with the smart dimmer 720 and push-button circuit 730, and that the existing wires of the configuration of figure 7A may be simply reconnected with the smart dimmer 720 and the push button 730.

According to a second embodiment the two-way switching circuit of figure 7A may be replaced with a retrofit configuration comprising a smart dimmer 720, a short 740, and a battery powered push button 750, also called sticky switch, having an electrical push button switching function 755 and configured to communicate wirelessly with the smart dimmer 720. The smart dimmer 720 may be built in accordance with any of the embodiments of a smart dimmer disclosed above. The short 740 has a first terminal 741 connected to a single phase line L of the mains 780, 781, and second terminal 742 connected to a first terminal 721 of the smart dimmer 720. The smart dimmer 720 has a second terminal 722 connected to a first terminal of the lamp 760. The other terminal of the lamp 760 is connected to the neutral N of the mains 780, 781. Optionally there may be provided a bleeder circuit 790 in parallel with the lamp 760. When the push button 750 is operated by a user, there is provided a wireless signal to smart dimmer 720, indicating to the smart dimmer that the lamp has to be switched on/off. It is clear from figure 7C and figure 7A, that the existing two-way switching circuit may be replaced with the smart dimmer 720, short 740 and battery powered push-button circuit 750, and that the existing wires of the configuration of figure 7A may be simply reconnected with the smart dimmer 720 and the short 740.

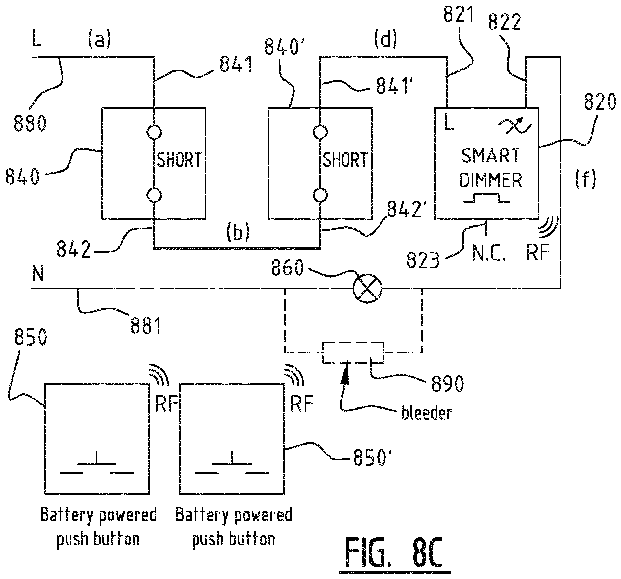

Figures 8A, 8B and 8C illustrate circuit diagrams for an existing configuration of a two-way switching circuit with intermediate switch, a first embodiment of a retrofit configuration thereof in accordance with the invention, and a second embodiment of a retrofit configuration thereof in accordance with the invention, respectively. The two-way switching circuit of figure 8A comprises a first switch 810 with a single pole changeover (SPCO) switching function 815 and a second switch 810' with a SPCO switching function 815', and an intermediate switch 800 with a two pole cross switching function 805. The first switch 810 has a common terminal 813 connected to a single phase line L of the mains, and a first and second terminal 811 and 812 connected to corresponding first and second terminals 801, 802 of the intermediate switch 800, respectively. Third and fourth terminals 803, 804 of the intermediate switch 800 are connected to first and second terminals 811', 812' of the second switch 810', respectively. The common terminal 813' of the second switch 810' is connected to a first terminal of the lamp 860, and the other terminal of the lamp 860 is connected to the neutral N of the mains 880, 881.

According to a first embodiment the two-way switching circuit with intermediate switch of figure 8A may be replaced with a retrofit configuration comprising a smart dimmer 820 and two push buttons 830, 830'. The smart dimmer 820 may be built in accordance with any embodiment of a smart dimmer disclosed above. The push button 830 has a first terminal 831 connected to a single phase line L of the mains 880, 881, and a second terminal 832 connected to a second terminal 832' of the push button 830'. The push button 830' has a first terminal 831' connected to the first terminal 831 of the push button 830, and a second terminal 832' connected to a third terminal 823 of the smart dimmer 820 for providing a voltage pulse to the smart dimmer 820 when the push button 830 or 830' is operated. The smart dimmer 820 has a first terminal 821 connected to the first terminal 831' of the push button 830', and a second terminal 822 connected to a first terminal of the lamp 860. The other terminal of the lamp 860 is connected to the neutral N of the mains 880, 881. Optionally there may be provided a bleeder circuit 890 in parallel with the lamp 860. When a push button 830 or 830' is operated by a user, there is provided a pulse signal on terminal 823, indicating to the smart dimmer that the lamp has to be switched on/off. It is clear from figure 8B and figure 8A, that the existing two-way switching circuit with intermediate switch may be replaced with the smart dimmer 820 and two push-buttons 830, 830', and that the existing wires of the configuration of figure 8A may be simply reconnected with the smart dimmer 820 and the push button 830.

According to a second embodiment the two-way switching circuit of figure 8A may be replaced with a retrofit configuration comprising a smart dimmer 820, two shorts 840, 840', and two battery powered push buttons 850, 850' configured to communicate wirelessly with the smart dimmer 820. The smart dimmer 820 may be built in accordance with any of the embodiments of a smart dimmer disclosed above. The short 840 has a first terminal 841 connected to a single phase line L of the mains 880, 881, and second terminal 842 connected to a second terminal 842' of the short 840'. The short 840' has a first terminal 841' connected to a first terminal 821 of the smart dimmer 820. The smart dimmer 820 has a second terminal 822 connected to a first terminal of the lamp 860. The other terminal of the lamp 860 is connected to the neutral N of the mains 880, 881. Optionally there may be provided a bleeder circuit 890 in parallel with the lamp 860. When the push button 850 or 850' is operated by a user, there is provided a wireless signal to smart dimmer 820, indicating to the smart dimmer 820 that the lamp 860 has to be switched on/off. It is clear from figure 8C and figure 8A, that the existing two-way switching circuit with intermediate switch may be replaced with the smart dimmer 820, two shorts 840 and two battery powered push-buttons 850, 850', and that the existing wires of the configuration of figure 8A may be simply reconnected with the smart dimmer 820 and the shorts 840, 840'.

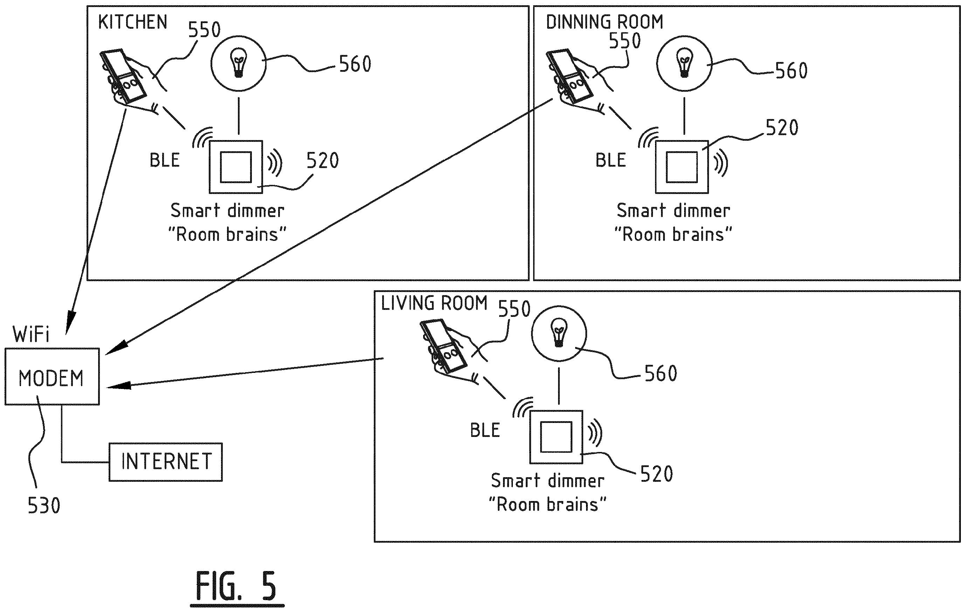

Figure 5 illustrates a second use case in which an embodiment of the invention is used. In the embodiment of figure 5, there is shown a building with a kitchen, a dining room and a living room. Each room is provided with a smart dimmer 520 which controls a dimmable light 560. The smart dimmer 520 may implemented as described in figure 3 and may function as the first electrical device 226 of figure 2. In this use case it is assumed that there are no other smart electrical devices in the building, i.e. the other electrical devices may be existing non-smart electrical devices. The smart dimmer switches 520 can be configured via a mobile device 550, e.g. a smart phone, using e.g. a Bluetooth protocol. The mobile device 550 communicates with a modem 530 e.g. via a WiFi network. In addition, the smart dimmers 520 can communicate with the modem 530.

In known electrical systems, particularly in automation or home automation systems for installation in a building or the like, one or more central or decentralized control units are directly or indirectly connected to multiple inputs and multiple outputs. The one or more central or decentralized control units are configured, upon receipt of specific instructions from the inputs, to initiate certain actions of devices via the outputs. The inputs are connected to input devices such as electrical devices (e.g. switches or rotary knobs with dimmer means), sensors, etc., which are provided in several places in the area to be controlled, typically a home or other type of building. The outputs are connected to output devices such as lighting equipment, technical equipment such as HVAC systems and various actuators such as automated blinds and curtains. Hence, the configuration of the one or more central or decentralized control units determines, inter alia, with which button or buttons each device can be operated, and under what conditions. The inputs and outputs are housed in application-specific modules, called I/O modules, which are arranged to communicate with the one or more central or decentralized control units. Also in such known electrical systems the smart electrical devices of the invention may replace the old electrical devices. If there is a central controller in place, this controller may remain the main controller. However, if the main controller fails, a smart electrical device operating as a master device may take over.

The functions of the various elements shown in the figures, including any functional blocks labelled as "units" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention.

Whilst the principles of the invention have been set out above in connection with specific embodiments, it is to be understood that this description is merely made by way of example and not as a limitation of the scope of protection which is determined by the appended claims.

## Claims

1. A method for replacing an existing switch or dimmer (710', 810') in an existing two-way switching circuit having a phase line (L) and a neutral (N) of mains (780, 781, 880, 881) of a building with a smart device, the existing two-way switching circuit comprising said existing switch or dimmer (710', 810') and an other switch (710; 800, 810) connected via existing wiring(720; 820), the method comprising the following steps:
- removing the existing switch or dimmer (710', 810') from a wall box where cables to a lamp are located;
- placing the smart device in said wall box; the smart device comprising:
a base comprising an electrical part configured for being at least partially built-in in a wall of the building and configured for being directly connected, in a wall, to electrical wires present in the wall of the building;
a communication part on said base;
a microcontroller on said base connected to the communication part and to said electrical part, said microcontroller being configured for processing data received by the communication part and for configuring or operating the electrical part accordingly; and
for sending data via said communication part;
- replacing the other existing switch with a new switch (730; 750; 830, 830'; 850, 850') which is capable of providing the smart device with a signal when said new switch is being operated by a user; and
- changing the wiring diagram using the existing wiring ((a), (b), (c); (a), (b), (c), (e), (f)); wherein the step of replacing the other existing switch comprises adding a new wired switch (730; 830, 830') and wherein the step of changing the wiring diagram comprises connecting the communication part via the existing wiring ((b)) to the new wired switch (730; 830, 830'); or
wherein the step of replacing the other existing switch comprises adding a new switch (750; 850, 850') configured to communicate wirelessly in a direct manner with the communication part of the smart device; and wherein the step of changing the wiring comprises connecting a short (740; 840) for connecting the single phase line (L) of the mains (780, 781, 880, 881) where the other existing switch has been removed;
wherein the smart device is a smart dimmer and the electrical part has a controllable dimming function; or wherein the smart device is a smart switch and the electrical part has a controllable switching function.

2. The method of claim 1, wherein the existing two-way switching circuit is configured for for controlling a lamp, comprising a first switch (710) with a single pole changeover (SPCO) switching function (715) and a second switch (710') with a SPCO switching function (715'), said first switch (710) having a common terminal (713) connected to a single phase line (L) of the mains (780, 781), and a first and second terminal (711, 712) connected to corresponding first and second terminals (711', 712') of the second switch (710'), respectively, said common terminal (713') of the second switch (710') being connected to a first terminal of the lamp (760), and the other terminal of the lamp (760) being connected to the neutral (N) of the mains; and
wherein said first switch (710) and said second switch (710') are replaced with the new switch in the form of a push button (730) having an electrical push button switching function (735) and the smart device (720), respectively;
wherein changing the wiring diagram using existing wiring comprises:
connecting a first terminal (731) of the push button (730) to the single phase line (L) of the mains (780, 781), and a second terminal (732) thereof to a third terminal (723) of the smart device (720) using existing wiring ((b)), for providing a signal to the smart device (720) when the push button (730) is operated;
connecting a first terminal (721) of the smart device (720) to the first terminal (731) of the push button (730) using existing wiring ((c)), and a second terminal (722) thereof to a first terminal of the lamp (760) using existing wiring ((d)).

3. The method of claim 1, wherein the existing two-way switching circuit is configured for controlling a lamp, comprising a first switch (710) with a single pole changeover (SPCO) switching function (715) and a second switch (710') with a SPCO switching function (715'), said first switch (710) having a common terminal (713) connected to a single phase line (L) of the mains (780, 781), and a first and second terminal (711, 712) connected to corresponding first and second terminals (711', 712') of the second switch (710'), respectively, said common terminal (713') of the second switch (710') being connected to a first terminal of the lamp (760), and the other terminal of the lamp (760) being connected to the neutral (N) of the mains; and
wherein said first switch (710) and said second switch (710') are replaced with the new switch in the form of a battery powered push button (750) having an electrical push button switching function (755) and configured to provide a wireless signal to smart device (720) for indicating to the smart device that the lamp (760) has to be switched on/off, a short (740) and the smart device (720);
wherein changing the wiring diagram using existing wiring comprises:
connecting a first terminal (741) of the short (740) to the single phase line L of the mains (780, 781), and a second terminal (742) thereof to a first terminal (721) of the smart device (720), using existing wiring ((a),(b));
connecting a second terminal (722) of the smart device (720) to a first terminal of the lamp (760) using existing wiring ((d)).

4. The method of claim 1, wherein the existing two-way switching circuit comprises a first switch (810) with a single pole changeover (SPCO) switching function (815), a second switch (810') with a SPCO switching function (815'), and an intermediate switch (800) with a two pole cross switching function (805); said first switch (810) having a common terminal (813) connected to a single phase line L of the mains, and a first and second terminal (811) and (812) connected to corresponding first and second terminals (801, 802) of the intermediate switch (800), respectively; wherein third and fourth terminals (803, 804) of the intermediate switch (800) are connected to first and second terminals (811', 812') of the second switch (810'), respectively; said common terminal (813') of the second switch (810') being connected to a first terminal of the lamp (860), and the other terminal of the lamp (860) being connected to the neutral N of the mains (880, 881); wherein said first switch (810), said intermediate switch (800), and said second switch (810') are replaced with the new switch in the form of a first push button (830), a second push button (830') and the smart device (820);
wherein changing the wiring diagram using existing wiring comprises:
connecting a first terminal (831) of the first push button (830) to a single phase line L of the mains (880, 881), and a second terminal (832) thereof to a second terminal (832') of the second push button (830'), using existing wiring ((a),(c));
connecting a first terminal (831') of the second push button (830') to the first terminal (831) of the first push button (830), and a second terminal (832') thereof to a third terminal (823) of the smart device (820), using existing wiring ((b),(e));
connecting a first terminal (821) of the smart device (820) to the first terminal (831') of the second push button (830'), and a second terminal (822) thereof to a first terminal of the lamp (860), using existing wiring ((d),(f)).

5. The method of claim 1, wherein the existing two-way switching circuit comprises a first switch (810) with a single pole changeover (SPCO) switching function (815), a second switch (810') with a SPCO switching function (815'), and an intermediate switch (800) with a two pole cross switching function (805); said first switch (810) having a common terminal (813) connected to a single phase line L of the mains, and a first and second terminal (811) and (812) connected to corresponding first and second terminals (801, 802) of the intermediate switch (800), respectively; wherein third and fourth terminals (803, 804) of the intermediate switch (800) are connected to first and second terminals (811', 812') of the second switch (810'), respectively; said common terminal (813') of the second switch (810') being connected to a first terminal of the lamp (860), and the other terminal of the lamp (860) being connected to the neutral N of the mains (880, 881); wherein said first switch (810), said intermediate switch (800), and said second switch (810') are replaced with the new switch in the form of a first battery powered push buttons (850) configured to communicate wirelessly with the smart device (820), a second battery powered push buttons (850') configured to communicate wirelessly with the smart device (820), a first short (840), a second short (840'), and the smart device (820);
wherein changing the wiring diagram using existing wiring comprises:
connecting a first terminal (841) of the first short (840) to a single phase line L of the mains (880, 881), and a second terminal (842) thereof to a second terminal (842') of the second short (840'), using existing wiring ((a),(b));
connecting a first terminal (841') of the second short (840') to a first terminal (821) of the smart device (820), using existing wiring ((d));
connecting a second terminal (822) of the smart device (820) to a first terminal of the lamp (860), using existing wiring ((f)).

6. The method of any one of the previous claims, wherein the communication part of the smart device comprises a first communication module configured to operate in a spectrum range above 1,5 GHz; and/or a second communication module configured to operate in a spectrum range below 1,5 GHz.

7. The method of any one of the previous claims, wherein the electrical part of the smart device comprises a controllable switching function, and the microcontroller is configured to control the controllable switching function.

8. The method of any one of the previous claims, wherein the smart device comprises a measurement means configured for measuring a measure representative for the power consumed by the lamp, and wherein said measurement means is connected to the microcontroller and the microcontroller is configured to communicate said measure via the communication part.

9. The method of any one of the previous claims, wherein the smart device comprises a button configured to be mounted on the base and to control the electrical part; and a cover plate configured to be attached to said base after mounting said base in the wall.

10. The method of any one of the previous claims, wherein the smart device comprises power converter circuitry configured to convert power from a power source, typically the mains, to a suitable level for feeding at least the microcontroller and the communication part.

11. The method of any one of the previous claims, wherein the smart device comprises a data storage connected to the microcontroller, said data storage storing configuration data used by the microcontroller to operate the electrical part.

12. The method of any one of the previous claims, wherein the smart device comprises a time knowledge module comprising a real time clock and configured to provide the microcontroller with time data.

## Patentansprüche

1. Verfahren zum Erzetzen eines vorhandenen Schalters oder Dimmers (710', 810') in einem vorhandenen Wechselschaltkreis mit einer Phasenleitung (L) und einem Neutralleiter (N) des Netzes (780, 781, 880, 881) eines Gebäudes mit einer intelligenten Gerät, wobei der vorhandene Wechselschaltkreis den vorhandenen Schalter oder Dimmer (710', 810') und einen anderen Schalter (710; 800, 810) umfasst, der über vorhandene Verdrahtung (720; 820) verbunden ist, wobei das Verfahren die folgenden Schritte umfasst:
- Entfernen des vorhandenen Schalters oder Dimmers (710', 810') aus einer Wanddose, in der sich Kabel zu einer Lampe befinden;
- Platzieren der Intelligenten Gerät in der Wanddose; wobei die Intelligenten Gerät Folgendes umfasst:
eine Basis, die ein elektrisches Teil umfasst, das konfiguriert ist, um wenigstens teilweise in eine Wand des Gebäudes eingebaut zu sein, und konfiguriert ist, um in einer Wand mit in der Wand des Gebäudes vorliegenden elektrischen Drähten direkt verbunden zu sein;
ein Kommunikationsteil auf der Basis;
einen Mikrocontroller auf der Basis, der mit dem Kommunikationsteil und mit dem elektrischen Teil verbunden ist, wobei der Mikrocontroller zum Verarbeiten von Daten konfiguriert ist, die durch das Kommunikationsteil empfangen werden, und zum dementsprechenden Konfigurieren oder Betätigen des elektrischen Teils konfiguriert ist; und
zum Senden von Daten über das Kommunikationsteil;
- Austauschen des anderen vorhandenen Schalters mit einem neuen Schalter (730; 750; 830, 830'; 850, 850'), der in der Lage ist, der Intelligenten Gerät ein Signal bereitzustellen, wenn der neue Schalter durch einen Benutzer betätigt wird; und
- Ändern des Verdrahtungsschemas unter Verwendung der vorhandenen Verdrahtung ((a), (b), (c); (a), (b), (c), (e), (f));
wobei der Schritt des Austauschens des anderen vorhandenen Schalters ein Hinzufügen eines neuen verdrahteten Schalters (730; 830, 830') umfasst und wobei der Schritt des Änderns des Verdrahtungsschemas ein Verbinden des Kommunikationsteils über die vorhandene Verdrahtung ((b)) mit dem neuen verdrahteten Schalter (730; 830, 830') umfasst; oder
wobei der Schritt des Austauschens des anderen vorhandenen Schalters das Hinzufügen eines neuen Schalters (750; 850, 850') umfasst, der konfiguriert ist, um auf eine direkte Weise mit dem Kommunikationsteil der Intelligenten Gerät drahtlos zu kommunizieren; und wobei der Schritt des Änderns der Verdrahtung das Verbinden eines Kurzschlusses (740; 840) zum Verbinden der Einphasenleitung (L) des Netzes (780, 781, 880, 881) umfasst, an dem der andere vorhandene Schalter entfernt wurde;
wobei die Intelligenten Gerät ein Smart-Dimmer ist und das elektrische Teil eine steuerbare Dimmfunktion aufweist; oder wobei die Intelligenten Gerät ein Smart-Schalter ist und das elektrische Teil eine steuerbare Schaltfunktion aufweist.

2. Verfahren nach Anspruch 1, wobei der vorhandene Wechselschaltkreis zum Steuern einer Lampe konfiguriert ist, der einen ersten Schalter (710) mit einer Schaltfunktion einer einpoligen Umschaltung (*single pole changeover* - SPCO) (715) und einen zweiten Schalter (710') mit einer SPCO-Schaltfunktion (715') umfasst, wobei der erste Schalter (710) einen gemeinsamen Anschluss (713), der mit einer Einphasenleitung (L) des Netzes (780, 781) verbunden ist, und einen ersten und einen zweiten Anschluss (711, 712) aufweist, die mit einem entsprechenden ersten beziehungsweise zweiten Anschluss (711', 712') des zweiten Schalters (710') verbunden sind, wobei der gemeinsame Anschluss (713') des zweiten Schalters (710') mit einem ersten Anschluss der Lampe (760) verbunden ist und der andere Anschluss der Lampe (760) mit dem Neutralleiter (N) des Netzes verbunden ist; und
wobei der erste Schalter (710) und der zweite Schalter (710') mit dem neuen Schalter in der Form eines Druckknopfs (730), der eine elektrische Druckknopfschaltfunktion (735) aufweist, beziehungsweise der Intelligenten Gerät (720) ausgetauscht werden;
wobei das Ändern des Verdrahtungsschemas unter Verwendung vorhandener Verdrahtung Folgendes umfasst:
Verbinden eines ersten Anschlusses (731) des Druckknopfs (730) mit der Einphasenleitung (L) des Netzes (780, 781) und eines zweiten Anschlusses (732) davon mit einem dritten Anschluss (723) der Intelligenten Gerät (720) unter Verwendung vorhandener Verdrahtung ((b)) zum Bereitstellen eines Signals an die Intelligenten Gerät (720), wenn der Druckknopf (730) betätigt wird;
Verbinden eines ersten Anschlusses (721) der Intelligenten Gerät (720) mit dem ersten Anschluss (731) des Druckknopfs (730) unter Verwendung vorhandener Verdrahtung ((c)) und eines zweiten Anschlusses (722) davon mit einem ersten Anschluss der Lampe (760) unter Verwendung vorhandener Verdrahtung ((d)).

3. Verfahren nach Anspruch 1, wobei der vorhandene Wechselschaltkreis zum Steuern einer Lampe konfiguriert ist, der einen ersten Schalter (710) mit einer Schaltfunktion einer einpoligen Umschaltung (SPCO) (715) und einen zweiten Schalter (710') mit einer SPCO-Schaltfunktion (715') umfasst, wobei der erste Schalter (710) einen gemeinsamen Anschluss (713), der mit einer Einphasenleitung (L) des Netzes (780, 781) verbunden ist, und einen ersten und einen zweiten Anschluss (711, 712) aufweist, die mit dem entsprechenden ersten beziehungsweise zweiten Anschluss (711', 712') des zweiten Schalters (710') verbunden sind, wobei der gemeinsame Anschluss (713') des zweiten Schalters (710') mit einem ersten Anschluss der Lampe (760) verbunden ist und der andere Anschluss der Lampe (760) mit dem Neutralleiter (N) des Netzes verbunden ist; und
wobei der erste Schalter (710) und der zweite Schalter (710') mit dem neuen Schalter in der Form von Folgendem ausgetauscht werden: einem batteriebetriebenen Druckknopf (750), der eine elektrische Druckknopfschaltfunktion (755) aufweist und konfiguriert ist, um der Intelligenten Gerät (720) zum Anzeigen der Intelligenten Gerät, dass die Lampe (760) ein-/ausgeschaltet werden muss, ein drahtloses Signal bereitzustellen, einem Kurzschluss (740) und der Intelligenten Gerät (720);
wobei das Ändern des Verdrahtungsschemas unter Verwendung vorhandener Verdrahtung Folgendes umfasst:
Verbinden eines ersten Anschlusses (741) des Kurzschlusses (740) mit der Einphasenleitung L des Netzes (780, 781) und eines zweiten Anschlusses (742) davon mit einem ersten Anschluss (721) der Intelligenten Gerät (720) unter Verwendung vorhandener Verdrahtung ((a), (b));
Verbinden eines zweiten Anschlusses (722) der Intelligenten Gerät (720) mit einem ersten Anschluss der Lampe (760) unter Verwendung vorhandener Verdrahtung ((d)).

4. Verfahren nach Anspruch 1, wobei der vorhandene Wechselschaltkreis einen ersten Schalter (810) mit einer Schaltfunktion einer einpoligen Umschaltung (SPCO) (815), einen zweiten Schalter (810') mit einer SPCO-Schaltfunktion (815') und einen Zwischenschalter (800) mit einer zweipoligen Kreuzschaltfunktion (805) umfasst; wobei der erste Schalter (810) einen gemeinsamen Anschluss (813), der mit einer Einphasenleitung L des Netzes verbunden ist, und einen ersten und einen zweiten Anschluss (811) und (812) aufweist, die mit einem entsprechenden ersten beziehungsweise zweiten Anschluss (801, 802) des Zwischenschalters (800) verbunden sind;
wobei dritte und vierte Anschlüsse (803, 804) des Zwischenschalters (800) mit einem ersten beziehungsweise zweiten Anschluss (811', 812') des zweiten Schalters (810') verbunden sind;
wobei der gemeinsame Anschluss (813') des zweiten Schalters (810') mit einem ersten Anschluss der Lampe (860) verbunden ist und der andere Anschluss der Lampe (860) mit dem Neutralleiter N des Netzes (880, 881) verbunden ist;
wobei der erste Schalter (810), der Zwischenschalter (800) und der zweite Schalter (810') mit dem neuen Schalter in der Form eines ersten Druckknopfs (830), eines zweiten Druckknopfs (830') und der Intelligenten Gerät (820) ausgetauscht werden;
wobei das Ändern des Verdrahtungsschemas unter Verwendung vorhandener Verdrahtung Folgendes umfasst:
Verbinden eines ersten Anschlusses (831) des ersten Druckknopfs (830) mit einer Einphasenleitung L des Netzes (880, 881) und eines zweiten Anschlusses (832) davon mit einem zweiten Anschluss (832') des zweiten Druckknopfs (830') unter Verwendung vorhandener Verdrahtung ((a),(c));
Verbinden eines ersten Anschlusses (831') des zweiten Druckknopfs (830') mit dem ersten Anschluss (831) des ersten Druckknopfs (830) und eines zweiten Anschlusses (832') davon mit einem dritten Anschluss (833) der Intelligenten Gerät (820) unter Verwendung vorhandener Verdrahtung ((b),(e));
Verbinden eines ersten Anschlusses (821) der Intelligenten Gerät (820) mit dem ersten Anschluss (831') des zweiten Druckknopfs (830') und eines zweiten Anschlusses (822) davon mit einem ersten Anschluss der Lampe (860) unter Verwendung vorhandener Verdrahtung ((d),(f)).

5. Verfahren nach Anspruch 1, wobei der vorhandene Wechselschaltkreis einen ersten Schalter (810) mit Schaltfunktion einer einpoligen Umschaltung (SPCO) (815), einen zweiten Schalter (810') mit einer SPCO-Schaltfunktion (815') und einen Zwischenschalter (800) mit einer zweipoligen Kreuzschaltfunktion (805) umfasst;
wobei der erste Schalter (810) einen gemeinsamen Anschluss (813), der mit einer Einphasenleitung L des Netzes verbunden ist, und einen ersten und einen zweiten Anschluss (811) und (812) aufweist, die mit dem entsprechenden ersten beziehungsweise zweiten Anschluss (801, 802) des Zwischenschalters (800) verbunden sind;
wobei dritte und vierte Anschlüsse (803, 804) des Zwischenschalters (800) mit dem ersten beziehungsweise zweiten Anschluss (811', 812') des zweiten Schalters (810') verbunden sind; wobei der gemeinsame Anschluss (813') des zweiten Schalters (810') mit einem ersten Anschluss der Lampe (860) verbunden ist und der andere Anschluss der Lampe (860) mit dem Neutralleiter N des Netzes (880, 881) verbunden ist;
wobei der erste Schalter (810), der Zwischenschalter (800) und der zweite Schalter (810') mit dem neuen Schalter in der Form von Folgendem ausgetauscht werden: einem ersten batteriebetriebenen Druckknopf (850), der konfiguriert ist, um mit der Intelligenten Gerät (820) drahtlos zu kommunizieren, einem zweiten batteriebetriebenen Druckknopf (850'), der konfiguriert ist, um mit der Intelligenten Gerät (820) drahtlos zu kommunizieren, einem ersten Kurzschluss (840), einem zweiten Kurzschluss (840') und der Intelligenten Gerät (820);
wobei das Ändern des Verdrahtungsschemas unter Verwendung vorhandener Verdrahtung Folgendes umfasst:
Verbinden eines ersten Anschlusses (841) des ersten Kurzschlusses (840) mit einer Einphasenleitung L des Netzes (880, 881) und eines zweiten Anschlusses (842) davon mit einem zweiten Anschluss (842') des zweiten Kurzschlusses (840') unter Verwendung vorhandener Verdrahtung ((a),(b));
Verbinden eines ersten Anschlusses (841') des zweiten Kurzschlusses (840') mit einem ersten Anschluss (821) der Intelligenten Gerät (820) unter Verwendung vorhandener Verdrahtung ((d));
Verbinden eines zweiten Anschlusses (822) der Intelligenten Gerät (820) mit einem ersten Anschluss der Lampe (860) unter Verwendung vorhandener Verdrahtung ((f)).

6. Verfahren nach einem der vorhergehenden Ansprüche, wobei das Kommunikationsteil der Intelligenten Gerät Folgendes umfasst: ein erstes Kommunikationsmodul, das konfiguriert ist, um in einem Spektralbereich über 1,5 GHz zu arbeiten; und/oder ein zweites Kommunikationsmodul, das konfiguriert ist, um in einem Spektralbereich unter 1,5 GHz zu arbeiten.

7. Verfahren nach einem der vorhergehenden Ansprüche, wobei das elektrische Teil der Intelligenten Gerät eine steuerbare Schaltfunktion umfasst und der Mikrocontroller konfiguriert ist, um die steuerbare Schaltfunktion zu steuern.

8. Verfahren nach einem der vorhergehenden Ansprüche, wobei die Intelligenten Gerät ein Messmittel umfasst, das zum Messen einer Messung konfiguriert ist, die den durch die Lampe verbrauchten Strom darstellt, und wobei das Messmittel mit dem Mikrocontroller verbunden ist und der Mikrocontroller konfiguriert ist, um die Messung über das Kommunikationsteil zu kommunizieren.

9. Verfahren nach einem der vorhergehenden Ansprüche, wobei die Intelligenten Gerät Folgendes umfasst: einen Knopf, der konfiguriert ist, um auf der Basis montiert zu werden und um das elektrische Teil zu steuern; und eine Abdeckplatte, die konfiguriert ist, um an der Basis befestigt zu werden, nachdem die Basis in der Wand montiert wird.

10. Verfahren nach einem der vorhergehenden Ansprüche, wobei die Intelligenten Gerät eine Stromrichterschaltungsanordnung umfasst, die konfiguriert ist, um Strom aus einer Stromquelle, typischerweise dem Netz, auf einen geeigneten Pegel zum Speisen wenigstens des Mikrocontrollers und des Kommunikationsteils umzurichten.

11. Verfahren nach einem der vorhergehenden Ansprüche, wobei die Intelligenten Gerät einen Datenspeicher umfasst, der mit dem Mikrocontroller verbunden ist, wobei der Datenspeicher Konfigurationsdaten speichert, die durch den Mikrocontroller verwendet werden, um das elektrische Teil zu betätigen.

12. Verfahren nach einem der vorhergehenden Ansprüche, wobei die Intelligenten Gerät ein Zeitkenntnismodul umfasst, das eine Echtzeituhr umfasst und konfiguriert ist, um dem Mikrocontroller Zeitdaten bereitzustellen.

## Revendications

1. Procédé destiné à remplacer un commutateur ou gradateur existant (710', 810') dans un circuit de commutation bidirectionnel existant ayant une ligne de phase (L) et un conducteur neutre (N) de secteur (780, 781, 880, 881) d'un bâtiment avec un dispositif intelligent, le circuit de commutation bidirectionnel existant comprenant ledit commutateur ou gradateur existant (710', 810') et un autre commutateur (710 ; 800, 810) connectés via un câblage existant (720 ; 820), le procédé comprenant les étapes suivantes :
- le retrait du commutateur ou du gradateur existant (710', 810') d'une boîte murale où se trouvent les câbles vers une lampe ;
- le placement du dispositif intelligent dans ladite boîte murale ; le dispositif intelligent comprenant :
une base comprenant une partie électrique configurée pour être au moins partiellement intégrée dans un mur du bâtiment et configurée pour être directement connectée, dans un mur, à des fils électriques présents dans le mur du bâtiment ;
une partie communication sur ladite base ;
un microcontrôleur sur ladite base connecté à la partie communication et à ladite partie électrique, ledit microcontrôleur étant configuré pour traiter des données reçues par la partie communication et pour configurer ou faire fonctionner la partie électrique en conséquence ; et
pour envoyer des données par le biais de ladite partie communication ;
- le remplacement de l'autre commutateur existant par un nouveau commutateur (730 ; 750 ; 830, 830' ; 850, 850') qui est capable de fournir un signal au dispositif intelligent lorsque ledit nouveau commutateur est actionné par un utilisateur ; et
- le changement du schéma de câblage à l'aide du câblage existant ((a), (b), (c) ; (a), (b), (c), (e), (f)) ;
dans lequel l'étape de remplacement de l'autre commutateur existant comprend l'ajout d'un nouveau commutateur filaire (730 ; 830, 830') et dans lequel l'étape de modification du schéma de câblage comprend la connexion de la partie communication par le biais du câblage existant ((b)) au nouveau commutateur filaire (730 ; 830, 830') ; ou
dans lequel l'étape de remplacement de l'autre commutateur existant comprend l'ajout d'un nouveau commutateur (750 ; 850, 850') configuré pour communiquer sans fil de manière directe avec la partie communication du dispositif intelligent ; et dans lequel l'étape de modification du câblage comprend la connexion d'un court-circuit (740 ; 840) pour connecter la ligne monophasée (L) du secteur (780, 781, 880, 881) où l'autre commutateur existant a été retiré ;
dans lequel le dispositif intelligent est un gradateur intelligent et la partie électrique a une fonction de gradation commandable ; ou dans lequel le dispositif intelligent est un commutateur intelligent et la partie électrique a une fonction de commutation commandable.

2. Procédé selon la revendication 1, dans lequel le circuit de commutation bidirectionnel existant est configuré pour commander une lampe, comprenant un premier commutateur (710) doté d'une fonction de commutation unipolaire (SPCO) (715) et un second commutateur (710') doté d'une fonction de commutation SPCO (715'), ledit premier commutateur (710) ayant une borne commune (713) connectée à une ligne monophasée (L) du secteur (780, 781), et une première et une deuxième borne (711, 712) connectées respectivement aux première et deuxième bornes (711', 712') correspondantes du second commutateur (710'), ladite borne commune (713') du second commutateur (710') étant connectée à une première borne de la lampe (760), et l'autre borne de la lampe (760) étant connectée au conducteur neutre (N) du secteur ; et
dans lequel ledit premier commutateur (710) et ledit second commutateur (710') sont remplacés par le nouveau commutateur sous la forme d'un bouton-poussoir (730) ayant une fonction de commutation de bouton-poussoir électrique (735) et un dispositif intelligent (720), respectivement ; dans lequel la modification du schéma de câblage à l'aide du câblage existant comprend :
la connexion d'une première borne (731) du bouton-poussoir (730) à la ligne monophasée (L) du secteur (780, 781), et d'une deuxième borne (732) de celui-ci à une troisième borne (723) du dispositif intelligent (720) à l'aide du câblage existant ((b)), pour fournir un signal au dispositif intelligent (720) lorsque le bouton-poussoir (730) est actionné ;
la connexion d'une première borne (721) du dispositif intelligent (720) à la première borne (731) du bouton-poussoir (730) à l'aide du câblage existant ((c)), et d'une deuxième borne (722) de celle-ci à une première borne de la lampe (760) à l'aide du câblage existant ((d)).

3. Procédé selon la revendication 1, dans lequel le circuit de commutation bidirectionnel existant est configuré pour commander une lampe, comprenant un premier commutateur (710) doté d'une fonction de commutation unipolaire (SPCO) (715) et d'un second commutateur (710') doté d'une fonction de commutation SPCO (715'), ledit premier commutateur (710) ayant une borne commune (713) connectée à une ligne monophasée (L) du secteur (780, 781), et une première et une deuxième borne (711, 712) connectées aux première et deuxième bornes correspondantes (711', 712') du second commutateur (710'), respectivement, ladite borne commune (713') du second commutateur (710') étant connectée à une première borne de la lampe (760) et l'autre borne de la lampe (760) étant connectées au conducteur neutre (N) du secteur ; et
dans lequel ledit premier commutateur (710) et ledit second commutateur (710') sont remplacés par le nouveau commutateur sous la forme d'un bouton-poussoir alimenté par batterie (750) ayant une fonction de commutation de bouton-poussoir électrique (755) et configuré pour fournir un signal sans fil au dispositif intelligent (720) pour indiquer au dispositif intelligent que la lampe (760) doit être allumée / éteinte, un court-circuit (740) et le dispositif intelligent (720) ;
dans lequel la modification du schéma de câblage à l'aide du câblage existant comprend :
la connexion d'une première borne (741) du court-circuit (740) à la ligne monophasée L du secteur (780, 781), et d'une deuxième borne (742) de celui-ci à une première borne (721) du dispositif intelligent (720), à l'aide du câblage existant ((a), (b)) ;
la connexion d'une deuxième borne (722) du dispositif intelligent (720) à une première borne de la lampe (760) à l'aide du câblage existant ((d)).

4. Procédé selon la revendication 1, dans lequel le circuit de commutation bidirectionnel existant comprend un premier commutateur (810) doté d'une fonction de commutation unipolaire (SPCO) (815), un second commutateur (810') doté d'une fonction de commutation SPCO (815'), et un commutateur intermédiaire (800) doté d'une fonction de commutation bipolaire croisée (805) ; ledit premier commutateur (810) ayant une borne commune (813) connectée à une ligne monophasée L du secteur, et une première et une deuxième bornes (811) et (812) connectées aux première et deuxième bornes (801, 802) correspondantes du commutateur intermédiaire (800), respectivement ;
dans lequel les troisième et quatrième bornes (803, 804) du commutateur intermédiaire (800) sont connectées aux première et deuxième bornes (811', 812') du second commutateur (810'), respectivement ;
ladite borne commune (813') du second commutateur (810') étant connectée à une première borne de la lampe (860), et l'autre borne de la lampe (860) étant connectée au conducteur neutre N du secteur (880, 881) ;
dans lequel ledit premier commutateur (810), ledit commutateur intermédiaire (800) et ledit second commutateur (810') sont remplacés par le nouveau commutateur sous la forme d'un premier bouton-poussoir (830), d'un second bouton-poussoir (830') et le dispositif intelligent (820) ;
dans lequel la modification du schéma de câblage à l'aide du câblage existant comprend :
la connexion d'une première borne (831) du premier bouton-poussoir (830) à une ligne monophasée L du secteur (880, 881), et une deuxième borne (832) de celui-ci à une deuxième borne (832') du second poussoir-bouton (830'), à l'aide du câblage existant ((a), (c)) ;
la connexion d'une première borne (831') du second bouton-poussoir (830') à la première borne (831) du premier bouton poussoir (830), et d'une deuxième borne (832') de celui-ci à une troisième borne (823) du dispositif intelligent (820), à l'aide du câblage existant ((b), (e)) ;
la connexion d'une première borne (821) du dispositif intelligent (820) à la première borne (831') du second bouton-poussoir (830'), et d'une deuxième borne (822) de celui-ci à une première borne de la lampe (860), à l'aide du câblage existant ((d), (f)).

5. Procédé selon la revendication 1, dans lequel le circuit de commutation bidirectionnel existant comprend un premier commutateur (810) doté d'une fonction de commutation unipolaire (SPCO) (815), un second commutateur (810') doté d'une fonction de commutation SPCO (815'), et un commutateur intermédiaire (800) doté d'une fonction de commutation bipolaire croisée (805) ; ledit premier commutateur (810) ayant une borne commune (813) connectée à une ligne monophasée L du secteur, et une première et une deuxième bornes (811) et (812) connectées aux première et deuxième bornes (801, 802) correspondantes du commutateur intermédiaire (800), respectivement ;
dans lequel les troisième et quatrième bornes (803, 804) du commutateur intermédiaire (800) sont connectées aux première et deuxième bornes (811', 812') du second commutateur (810'), respectivement ;
ladite borne commune (813') du second commutateur (810') étant connectée à une première borne de la lampe (860), et l'autre borne de la lampe (860) étant connectée au conducteur neutre N du secteur (880, 881) ;
dans lequel ledit premier commutateur (810), ledit commutateur intermédiaire (800) et ledit second commutateur (810') sont remplacés par le nouveau commutateur sous la forme d'un premier bouton-poussoir alimenté par batterie (850) configuré pour communiquer sans fil avec le dispositif intelligent (820), d'un second bouton-poussoir alimenté par batterie (850') configuré pour communiquer sans fil avec le dispositif intelligent (820), d'un premier court-circuit (840), d'un second court-circuit (840') et du dispositif intelligent (820) ;
dans lequel la modification du schéma de câblage à l'aide du câblage existant comprend :
la connexion d'une première borne (841) du premier court-circuit (840) à une ligne monophasée L du secteur (880, 881), et d'une deuxième borne (842) de celui-ci à une deuxième borne (842') du second court-circuit (840'), à l'aide du câblage existant ((a), (b)) ;
la connexion d'une première borne (841') du second court-circuit (840') à une première borne (821) du dispositif intelligent (820), à l'aide du câblage existant ((d)) ;
la connexion d'une deuxième borne (822) du dispositif intelligent (820) à une première borne de la lampe (860), à l'aide du câblage existant ((f)).

6. Procédé selon l'une quelconque des revendications précédentes, dans lequel la partie communication du dispositif intelligent comprend un premier module de communication configuré pour fonctionner dans une plage spectrale supérieure à 1,5 GHz ; et/ou
un second module de communication configuré pour fonctionner dans une plage spectrale inférieure à 1,5 GHz.

7. Procédé selon l'une quelconque des revendications précédentes, dans lequel la partie électrique du dispositif intelligent comprend une fonction de commutation commandable, et le microcontrôleur est configuré pour commander la fonction de commutation commandable.

8. Procédé selon l'une quelconque des revendications précédentes, dans lequel le dispositif intelligent comprend un moyen de mesure configuré pour mesurer une mesure représentative de la puissance consommée par la lampe, et dans lequel ledit moyen de mesure est connecté au microcontrôleur et le microcontrôleur est configuré pour communiquer ladite mesure par le biais de la partie communication.

9. Procédé selon l'une quelconque des revendications précédentes, dans lequel le dispositif intelligent comprend un bouton configuré pour être monté sur la base et pour commander la partie électrique ; et
une plaque de recouvrement configurée pour être fixée à ladite base après avoir monté ladite base dans le mur.

10. Procédé selon l'une quelconque des revendications précédentes, dans lequel le dispositif intelligent comprend des circuits de conversion de puissance configurés pour convertir la puissance d'une source d'alimentation, généralement le secteur, à un niveau approprié pour alimenter au moins le microcontrôleur et la partie communication.

11. Procédé selon l'une quelconque des revendications précédentes, dans lequel le dispositif intelligent comprend un stockage de données connecté au microcontrôleur, ledit stockage de données stockant des données de configuration utilisées par le microcontrôleur pour faire fonctionner la partie électrique.

12. Procédé selon l'une quelconque des revendications précédentes, dans lequel le dispositif intelligent comprend un module de connaissance temporelle comprenant une horloge en temps réel et configuré pour fournir au microcontrôleur des données temporelles.
